# EUROPÄISCHE PATENTANMELDUNG

(11) **EP 4 241 913 A1**
(43) Veröffentlichungstag der Anmeldung: **13.09.2023**
(21) Anmeldenummer: 22161337.5
(22) Anmeldetag: 10.03.2022
(51) Int. Cl.: B23K 26/03, B23K 26/06, B23K 26/082, B23K 26/08, B23K 26/14, B23K 26/38, B23K 26/40, B23K 103/04

(54) **VERFAHREN UND VORRICHTUNG ZUM LASERSCHNEIDEN**

(71) Anmelder: Bystronic Laser AG, 3362 Niederönz (CH)
(72) Erfinder: SCHEIDIGER, Simon, 4900 Langenthal (CH); LUEDI, Andreas, 3400 Burgdorf (CH); BRUEGMANN, Michael, 3012 Bern (CH)
(74) Vertreter: Patentanwälte Geyer, Fehners & Partner mbB

(57) **Zusammenfassung**

Die Erfindung betrifft ein Verfahren zum Laserschneiden eines metallischen Werkstücks, beinhaltend Erzeugen eines Bearbeitungslaserstrahls mit einer Laserquelle (S1); Leiten des Bearbeitungslaserstrahls in einer z-Richtung auf das Werkstück unter Erzeugung einer Prozesszone im Werkstück (S2); Bewegen des Bearbeitungslaserstrahls und der Prozesszone über das Werkstück mit einer Schneidgeschwindigkeit zur Erzeugung eines Schnittspalts (S3), wobei in der Prozesszone eine Schmelzschicht entsteht; Leiten eines Prozessgases auf die Prozesszone (S4); und Detektieren eines von der Prozesszone emittierten Prozesslichts, das im Werkstück durch eine Wechselwirkung mit dem Bearbeitungslaserstrahl erzeugt wird, und Ermitteln der Strahlungstemperatur in der Prozesszone anhand des detektierten Prozesslichts (S5). Dabei werden Strahlungstemperaturwerte der Schmelzschicht aus mindestens einer Beobachtungsrichtung in einem Winkel von 0° bis 80° zur z-Richtung und projiziert auf eine x-y-Ebene senkrecht zu der Beobachtungsrichtung örtlich aufgelöst ermittelt (S6); und mindestens einer der ermittelten Strahlungstemperaturwerte wird auf einen in der x-y-Ebene dem jeweiligen Strahlungstemperaturwert entsprechenden, in der x-y-Ebene örtlich aufgelösten Soll-Strahlungstemperaturwert geregelt durch Anpassen mindestens eines Prozessparameters des Verfahrens (S7).

## Beschreibung

Die Erfindung betrifft ein Verfahren zum Laserschneiden eines metallischen Werkstücks, eine Vorrichtung zum Laserschneiden eines metallischen Werkstücks und ein Computerprogrammprodukt.

Beim Laserschneiden eines Werkstücks mit einem aktiven Prozessgas, wie z.B. Sauerstoff, wird das beispielsweise metallische Material des Werkstücks in einer Prozesszone verbrannt, nachdem es vom Laserstrahl auf die Zündtemperatur erhitzt wurde. Diese Art von Laserschneiden wird auch Brennschneiden genannt. Die Reaktion zwischen Sauerstoff und dem Material des Werkstücks erzeugt zusätzliche Wärme, die den Schneidprozess unterstützt. Dadurch entsteht in der Prozesszone des Werkstücks geschmolzenes flüssiges Material, das eine geringe Viskosität hat. Beim Schneiden mit einem inerten Prozessgas, wie Stickstoff oder Argon, wird das Material des Werkstücks durch die Laserleistung geschmolzen. Diese Art von Laserschneiden wird auch Schmelzschneiden genannt.

Beim Laserschneiden von Werkstücken wird angestrebt, eine hohe Schneidqualität zu erhalten. Eine hohe Schneidqualität ist anhand von Schneidqualitätsmerkmalen der Werkstücke, wie z.B. möglichst wenig Grat an der Unterseite der Werkstücke und/oder eine geringe Rauheit der Schnittkanten, z.B. wenig Riefen, erkennbar. Aus Schulz et al. (John Dowden (Hrsg.) und W. Schulz (Hrsg.), Theory of laser materials processing; Heat and mass transfer in modern technology. Springer, Gewerbestr. 11, 6330 Cham, Schweiz, 2017) ist bekannt, dass die Schneidqualität von der Weberzahl W der beim Laserschneiden erzeugten Schmelze und die Weberzahl W von der Oberflächenspannung abhängt. Je höher die Temperatur der Schmelze, umso geringer wird die Oberflächenspannung der Schmelze, vgl. Morohoshi et al. ISIJ International, Vol. 51 (2011), No. 10, pp. 1580-1586. Aus einem beim Laserschneiden erzeugten Prozessleuchten kann die Temperatur der Metallschmelze in einer Schnittfuge ermittelt werden, wie gezeigt von Pinder T. und Goppold C., Understanding the Changed Mechanisms of Laser Beam Fusion Cutting by Applying Beam Oscillation, Based on Thermographie Analysis, Appl. Sci. 2021, 11, 921. F.A. Halden und W.D. Kingery untersuchten den Effekt verschiedener Stoffe auf die Oberflächenspannung von flüssigem Eisen (F.A. Halden und W.D. Kingery Surface tension at elevated temperatures II, Effect of C, N, 0, and S on Liquid Iron Surface Tension and Interfacial Energy with Al2O3, The Journal of Physical Chemistry, 59(6): 557-559, 1955).

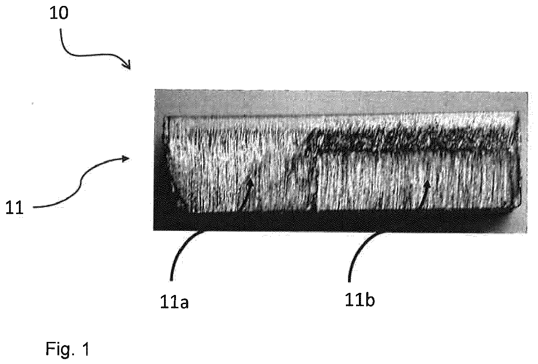

Um eine gute Schneidqualität zu erzielen, werden typischerweise verschiedene Schneidparameter, d.h. Prozessparameter des Verfahrens empirisch und daher mit großem Aufwand variiert, bis eine zufriedenstellende Schneidqualität gefunden wird. Fig. 1 zeigt die Schnittkante eines geschnittenen Werkstücks 10 mit akzeptabler Schneidqualität im Bereich 11a und mit ungenügender Schneidqualität in Form einer übermäßigen Rauheit im Bereich 11b.

Aufgabe der Erfindung ist es, ein Verfahren und eine Vorrichtung zum Laserschneiden eines metallischen Werkstücks bereitzustellen, welche auf einfache Weise eine hohe Schneidqualität ermöglichen.

Diese Aufgabe wird gelöst durch ein Verfahren zum Laserschneiden eines metallischen Werkstücks nach Anspruch 1, eine Vorrichtung zum Laserschneiden eines metallischen Werkstücks nach Anspruch 8, sowie ein Computerprogrammprodukt nach Anspruch 15.

Eine Ausführungsform betrifft ein Verfahren zum Laserschneiden eines metallischen Werkstücks, beinhaltend Erzeugen eines Bearbeitungslaserstrahls mit einer Laserquelle; Leiten des Bearbeitungslaserstrahls in einer z-Richtung auf das Werkstück unter Erzeugung einer Prozesszone im Werkstück; Bewegen des Bearbeitungslaserstrahls und der Prozesszone über das Werkstück mit einer Schneidgeschwindigkeit zur Erzeugung eines Schnittspalts, wobei in der Prozesszone eine Schmelzschicht entsteht; Leiten eines Prozessgases auf die Prozesszone; und Detektieren eines von der Prozesszone emittierten Prozesslichts, das im Werkstück durch eine Wechselwirkung mit dem Bearbeitungslaserstrahl erzeugt wird, und Ermitteln der Strahlungstemperatur in der Prozesszone anhand des detektierten Prozesslichts. Dabei werden Strahlungstemperaturwerte der Schmelzschicht aus mindestens einer Beobachtungsrichtung in einem Winkel von 0° bis 80°, bevorzugt 0° bis 60°, mehr bevorzugt 0° bis 45°, zur z-Richtung und projiziert auf eine x-y-Ebene senkrecht zu der Beobachtungsrichtung örtlich aufgelöst ermittelt; und mindestens einer der ermittelten Strahlungstemperaturwerte wird auf einen in der x-y-Ebene dem jeweiligen Strahlungstemperaturwert entsprechenden, in der x-y-Ebene örtlich aufgelösten Soll-Strahlungstemperaturwert geregelt durch Anpassen mindestens eines Prozessparameters des Verfahrens; wobei der mindestens eine Prozessparameter ausgewählt ist aus einer Leistung der Laserquelle; der Schneidgeschwindigkeit; einer der Schneidbewegung überlagerten, strahlformenden dynamischen Bewegung des Bearbeitungslaserstrahls; einer Position einer Fokalebene des Bearbeitungslaserstrahls; und einer chemischen Zusammensetzung des auf die Prozesszone geleiteten Prozessgases.

Die z-Richtung, die auch als Ausbreitungsrichtung des Bearbeitungslaserstrahls verstanden werden kann, kann in einem Winkel von 0° bis 60° zu einer Normalen der Werkstückoberfläche des Werkstücks orientiert sein. Wird eine ebene Werkstückoberfläche eines Werkstücks geschnitten, kann der Winkel der z-Richtung zur Normalen der Werkstückoberfläche als ein Winkel relativ zu einer Normalen der Ebene der Werkstückoberfläche verstanden werden. Wird eine gekrümmte oder unebene Werkstückoberfläche eines Werkstücks geschnitten, kann der Winkel der z-Richtung zur Normalen der Werkstückoberfläche als ein Winkel relativ zu einer Normalen einer an der Werkstückoberfläche anliegenden Tangentialebene verstanden werden, insbesondere einer Tangentialebene am Auftreffpunkt oder im Auftreffbereich des Bearbeitungslaserstrahls auf die Werkstückoberfläche. Ein Winkel der z-Richtung zur Normalen der Werkstückoberfläche abweichend von 0° kann beispielsweise für einen Schrägschnitt (Bevel-Cut) mit dem Bearbeitungslaserstrahl eingesetzt werden. Das Prozessgas kann als ein Prozessgasstrahl auf das Werkstück, insbesondere auf die Prozesszone, geleitet werden.

Die Strahlungstemperaturwerte der Schmelzschicht werden in dem Verfahren aus mindestens einer Beobachtungsrichtung in einem Winkel von 0° bis 80°, bevorzugt 0° bis 60°, mehr bevorzugt 0° bis 45°, zur z-Richtung und projiziert auf eine x-y-Ebene senkrecht zu der Beobachtungsrichtung örtlich aufgelöst ermittelt. Die x-y-Ebene kann als Beobachtungsebene, Projektionsebene, Objektebene und/oder Schärfenebene verstanden werden. Insbesondere ist die x-y-Ebene eine Ebene, die beim Detektieren, e.g. in einem Sensor einer Detektoreinrichtung, scharf abgebildet wird. Zusätzlich zu Punkten in der x-y-Ebene können auch Punkte um die x-y-Ebene scharf abgebildet werden, die innerhalb einer Schärfentiefe/Tiefenschärfe der Detektoreinrichtung bzw. des Sensors liegen. Beispielsweise kann, projiziert auf eine mit einer temperaturkalibrierten Kamera senkrecht beobachtete Oberflächenebene des Werkstücks als die x-y-Ebene, die örtliche Verteilung der Strahlungstemperaturwerte ermittelt werden. In anderen Beispielen kann, projiziert auf eine in einem Winkel zu einer Oberflächenebene des Werkstücks orientierte x-y-Ebene, die örtliche Verteilung der Strahlungstemperaturwerte ermittelt werden, wobei die Oberflächenebene des Werkstücks mit einer temperaturkalibrierten Kamera in einem Winkel zu Senkrechten beobachtet wird. Bei den ermittelten Strahlungstemperaturwerten kann es sich um thermische Strahlungstemperaturwerte handeln, d.h. es kann die von der Oberfläche des Werkstücks emittierte thermische Strahlung beobachtet werden. Befinden sich die ermittelten, örtlich aufgelösten Strahlungstemperaturwerte nicht in einem gewünschten Wertebereich und/oder in einer erwünschten örtlichen Verteilung, wird eine Regelung auf in der x-y-Ebene örtlich aufgelöste Soll-Strahlungstemperaturwerte durchgeführt, indem einer oder mehrere der Prozessparameter angepasst wird. Der gewünschte Wertebereich und/oder die erwünschte örtliche Verteilung sind jeweils durch vorbestimmte Soll-Strahlungstemperaturwerte der Schmelzschicht, insbesondere in Abhängigkeit von dem Material des Werkstücks und/oder von der Dicke des Werkstücks, vorgegeben. Die Soll-Strahlungstemperaturwerte können gespeicherten Erfahrungswerten, die im Verfahren aus einer Speichereinrichtung abgerufen werden, entsprechen und/oder können in einem Kalibrierungsverfahren, z.B. vor der Durchführung des Verfahrens, ermittelt und in der Speichereinrichtung gespeichert werden. Die Soll-Strahlungstemperaturwerte korrelieren mit einem jeweiligen optimalen Schneidqualitätsmerkmal, z.B. einer reduzierten Gratbildung an der Unterseite des Werkstücks oder einer reduzierten Riefenbildung an der Schnittkante. Sollen mehrere Schneidqualitätsmerkmale gleichzeitig optimiert werden, wird eine Kombination von Soll-Strahlungstemperaturwerten herangezogen, die eine Balance zwischen den jeweiligen Schneidqualitätsmerkmalen herbeiführt.

Das Verfahren ermöglicht eine Optimierung der Schneidqualität, insbesondere eine Reduzierung von Grat und/oder von Riefen am geschnittenen Werkstück. Die Schneidqualität, insbesondere die Gratbildung, ist von der Weberzahl W abhängig. Je grösser die Weberzahl W, umso weniger Grat haftet am Werkstück. Die Weberzahl W ist proportional zum Verhältnis der Dichte der am Werkstück erzeugten Schmelze zur Oberflächenspannung der Schmelze. Durch Beeinflussen der Weberzahl W können daher die Gratanhaftung und/oder die Rauheit der Schnittkante positiv beeinflusst werden. Die Weberzahl kann jedoch nicht während des Laserschneidens gemessen werden. Daher wird in dem Verfahren von Ausführungsformen das Verhältnis der Dichte zur Oberflächenspannung der Schmelze dadurch optimiert, dass die Strahlungstemperatur der Schmelzschicht gemessen und geregelt wird. Dies beruht insbesondere auf der Erkenntnis, dass sowohl die Dichte der Schmelze wie auch die Oberflächenspannung der Schmelze temperaturabhängig sind, wobei die Temperaturabhängigkeit der Oberflächenspannung überwiegt. In dem Verfahren von Ausführungsformen wird durch Messen der Strahlungstemperatur der Schmelzschicht in Echtzeit, d.h. während des Laserschneidens, die Strahlungstemperatur der Schmelzschicht und damit die Temperatur der Schmelze mittels einer Variation von Prozessparametern in Echtzeit beeinflusst und geregelt. Dadurch wird die Oberflächenspannung der Schmelzschicht in Echtzeit so verändert, dass eine gute Schneidqualität resultiert. Weil die zum Regeln genutzten Prozessparameter insbesondere Parameter des Bearbeitungslaserstrahls und/oder des Prozessgases und/oder die Schneidgeschwindigkeit betreffen, wird die Schneidqualität auf einfache Weise und in Echtzeit optimiert. Da in dem Verfahren auf die Strahlungstemperatur der Schmelzschicht, die beim Laserschneiden auf dem Werkstück entsteht und Material des Werkstücks enthält, abgestellt wird, kann eine Optimierung der Schneidqualität für eine Vielzahl von Materialien des Werkstücks und/oder der Schmelzschicht, wie z.B. unterschiedliche Metalle oder unterschiedliche Legierungen, z.B. Edelstahllegierungen, realisiert werden.

Das Prozesslicht kann in einem Winkel von 0° zur z-Richtung koaxial zum Bearbeitungslaserstrahl detektiert werden. Auf diese Weise kann das Prozesslicht aus Richtung des Bearbeitungslaserstrahls besonders genau und effektiv beobachtet werden.

Aus den ermittelten Strahlungstemperaturwerten kann die Temperatur der Schmelzschicht über den spezifischen Emissionsgrad der Schmelzschicht und/oder über eine Abhängigkeit des spezifischen Emissionsgrads der Schmelzschicht von der Beobachtungsrichtung und/oder durch Quotientenbildung mehrerer, aus derselben Beobachtungsrichtung bei unterschiedlichen Wellenlängen erfasster Intensitäten des Prozesslichts abgeleitet werden. So kann mittels des spezifischen Emissionsgrads unter Berücksichtigung des Materials der Schmelzschicht deren Temperatur bestimmt werden. Ferner kann, mittels der Abhängigkeit des spezifischen Emissionsgrads des Materials der Schmelzschicht von der Beobachtungsrichtung, durch eine, z.B. gleichzeitige, Ermittlung mehrerer Strahlungstemperaturwerte der Schmelzschicht aus mehreren unterschiedlichen Beobachtungsrichtungen die Temperatur abgeleitet werden. Zudem kann durch Erfassung des Prozesslichts in einer Beobachtungsrichtung mit z.B. zwei unterschiedlichen Wellenlängen die Temperatur der Schmelzschicht durch Quotientenbildung der zwei erfassten Intensitäten abgeleitet werden. Letzteres ermöglicht eine Ermittlung der Temperatur der Schmelzschicht ohne Berücksichtigung des spezifischen Emissionsgrades, insbesondere wenn der Emissionsgrad des betreffenden Materials nur in geringem Ausmaß wellenlängenabhängig ist. Auf diese Weise wird die Temperatur nicht aufgrund der "Helligkeit", sondern aufgrund der "Farbe" des Prozesslichts bestimmt und wird als eine Durchschnittstemperatur abgeleitet.

Unter dem Soll-Strahlungstemperaturwert kann ein Soll-Strahlungstemperaturwert der Schmelzschicht verstanden werden, der insbesondere in Abhängigkeit von dem Material des Werkstücks und/oder von der Dicke des Werkstücks vorgegeben ist. Der mindestens eine Soll-Strahlungstemperaturwert kann mindestens einem optimierten Schneidqualitätsmerkmal entsprechen. Auf diese Weise kann durch die Regelung der Strahlungstemperaturwerte in dem Verfahren mindestens ein optimiertes Schneidqualitätsmerkmal erhalten werden. Ferner kann aus dem mindestens einen ermittelten Strahlungstemperaturwert eine Weberzahl der Schmelzschicht und/oder eine Oberflächenspannung der Schmelzschicht und/oder ein Verhältnis der Oberflächenspannung zur Dichte der Schmelzschicht abgeleitet und durch Regeln des Strahlungstemperaturwertes dem optimierten Schneidqualitätsmerkmal entsprechend eingestellt werden. Die Weberzahl W ist proportional zum Verhältnis der Dichte der am Werkstück erzeugten Schmelze zur Oberflächenspannung der Schmelze. Durch Beeinflussen der Weberzahl W der Schmelzschicht und/oder der Oberflächenspannung der Schmelzschicht und/oder dem Verhältnis der Oberflächenspannung zur Dichte der Schmelzschicht können daher die Gratbildung am Werkstück und/oder die Rauheit der Schnittkante positiv beeinflusst werden. Das Schneidqualitätsmerkmal kann ausgewählt sein aus Tropfenbildung, Grattropfen, Gratperlen, Grat an der Unterseite des geschnittenen Werkstücks, einer Grathöhe an der Unterseite des geschnittenen Werkstücks, Riefen an einer Schnittkante des geschnittenen Werkstücks und einer Riefenfrequenz der Riefen an der Schnittkante.

Die strahlformende dynamische Bewegung des Bearbeitungslaserstrahls kann in und/oder relativ zur z-Richtung erfolgen. Die strahlformende dynamische Bewegung des Bearbeitungslaserstrahls kann mittels einer Variation einer Bewegungsamplitude des Bearbeitungslaserstrahls, insbesondere im Bereich von mindestens ±0,5 mm, bevorzugt mindestens ±1 mm, und/oder einer Variation einer Bewegungsfrequenz des Bearbeitungslaserstrahls, insbesondere im Bereich von 0,1 Hz bis 17 kHz, bevorzugt 10 Hz bis 15 kHz, mehr bevorzugt 100 Hz bis 4 kHz, eingestellt werden. Insbesondere kann die Anpassung der strahlformenden dynamischen Bewegung des Bearbeitungslaserstrahls als eine Variation mindestens einer Amplitude, mindestens einer Frequenz und/oder mindestens einer Phasenverschiebung des Bearbeitungslaserstrahls erfolgen. Dadurch kann eine dynamische Variation der Form des Bearbeitungslaserstrahls mit einer Fokalpunktoszillation erzeugt werden, die den Bearbeitungslaserstrahl durch eine spatiotemporale Verteilung der Laserenergie über die Werkstückoberfläche und/oder über eine Fokalebene des Bearbeitungslaserstrahls formt. Insbesondere kann dabei die Frequenz und/oder die Amplitude in Richtungen relativ zur z-Richtung und/oder in z-Richtung variiert werden. Dabei können die Richtungen relativ zur z-Richtung zwei zueinander senkrechte m- und n-Richtungen sein, die wiederum senkrecht zur z-Richtung verlaufen. Beispielsweise kann die Frequenz und/oder die Amplitude in m-Richtung, n-Richtung und/oder z-Richtung, und/oder die Phasenverschiebung kann in n-Richtung relativ zur m-Richtung, bevorzugt in n-Richtung und z-Richtung relativ zur m-Richtung, variiert werden. Dies ermöglicht eine zielgerichtete und exakte Regelung der Strahlungstemperaturwerte auf einen gewünschten Temperaturwertebereich und/oder auf eine erwünschte örtliche Verteilung derselben. In weiteren Beispielen kann die Bewegungsfrequenz des Bearbeitungslaserstrahls im Bereich von 0,1 bis 10 Hz gewählt werden. Dadurch können der Bearbeitungslaserstrahl und der Prozessgasstrahl, insbesondere deren zentrale Achsen, relativ zueinander verschoben werden und/oder der Bearbeitungslaserstrahl kann dejustiert werden. Dies ermöglicht, dass der Prozessgasstrahl auf dem Werkstück gezielt in einem Punkt und/oder in einem Bereich auftrifft, wo ein Strahlungstemperaturwert gemessen wird oder werden soll.

Die chemische Zusammensetzung des Prozessgases kann durch Beimischen und/oder Dosieren mindestens eines Gases, das mindestens ein für die Schmelzschicht oberflächenaktives Element oder Molekül enthält, insbesondere eines Sauerstoff enthaltenden Gases, eines Stickstoff enthaltenden Gases, eines Kohlenstoff enthaltenden Gases und/oder eines Schwefel enthaltenden Gases, eingestellt werden. Auf diese Weise kann die Oberflächenspannung der Schmelzschicht günstig beeinflusst und damit eine unerwünschte Tropfenbildung, Gratbildung und/oder Riefenbildung vermieden oder zumindest reduziert werden.

Der mindestens eine Soll-Strahlungstemperaturwert kann durch eine Kalibration von ermittelten Strahlungstemperaturwerten der Schmelzschicht auf mindestens ein optimales Schneidqualitätsmerkmal ermittelt werden. Dies ermöglicht, Soll-Strahlungstemperaturwerte für die Regelung der Strahlungstemperaturwerte zu ermitteln, die mit einem oder mehreren optimalen Schneidqualitätsmerkmalen, z.B. einer reduzierten Gratbildung an der Unterseite des Werkstücks oder einer reduzierten Riefenbildung an der Schnittkante korrelieren.

Die ermittelten Strahlungstemperaturwerte können auf eine Geometrie des Schnittspalts abgeglichen werden. Beispielsweise kann eine als Modell vorgegebene oder geschätzte dreidimensionale Geometrie der Prozesszone über das aufgenommene Prozesslicht projiziert werden. Auf diese Weise können die ermittelten Strahlungstemperaturwerte mit Orten der Prozesszone und/oder des Schnittspalts, z.B. Grat/Tropfen der Schmelze an der Unterseite des geschnittenen Werkstücks, korreliert werden.

Eine weitere Ausführungsform betrifft eine Vorrichtung zum Laserschneiden eines metallischen Werkstücks, insbesondere zum Laserschneiden eines metallischen Werkstücks mit einem Verfahren nach einer der vorstehenden Ausführungsformen und Abwandlungen davon. Die Vorrichtung enthält a) einen Schneidkopf mit einer Austrittsöffnung für den Bearbeitungslaserstrahl und für ein Prozessgas; und einer Lichtstrahloptik zum Leiten des Bearbeitungslaserstrahls in einer z-Richtung durch die Austrittsöffnung und zum Fokussieren und/oder zum strahlformenden dynamischen Bewegen des Bearbeitungslaserstrahls; b) eine Laserquelle zum Erzeugen des Bearbeitungslaserstrahls; c) eine Bewegungseinrichtung zum relativen Bewegen des Schneidkopfs mit einer Schneidgeschwindigkeit gegenüber dem Werkstück; d) mindestens eine Prozessgasquelle für das Prozessgas; und e) eine Detektoreinrichtung zum Detektieren eines von der Prozesszone emittierten Prozesslichts, das im Werkstück durch eine Wechselwirkung mit dem Bearbeitungslaserstrahl erzeugt wird, und zum Ermitteln der Strahlungstemperatur in der Prozesszone anhand des detektierten Prozesslichts. Die Detektoreinrichtung ist ausgebildet, Strahlungstemperaturwerte einer Schmelzschicht in der Prozesszone aus mindestens einer Beobachtungsrichtung (b) in einem Winkel von 0° bis 80°, bevorzugt 0° bis 60°, mehr bevorzugt 0° bis 45°, zur z-Richtung und projiziert auf eine x-y-Ebene senkrecht zu der Beobachtungsrichtung örtlich aufgelöst zu ermitteln. Die Vorrichtung weist ferner auf f) eine Regelungseinrichtung zum Regeln mindestens eines der ermittelten Strahlungstemperaturwerte auf einen in der x-y-Ebene dem jeweiligen Strahlungstemperaturwert entsprechenden, in der x-y-Ebene örtlich aufgelösten Soll-Strahlungstemperaturwert durch Anpassen mindestens eines Prozessparameters des Verfahrens. Der mindestens eine Prozessparameter ist ausgewählt aus der Leistung der Laserquelle; der Schneidgeschwindigkeit, einer der Schneidbewegung überlagerten, strahlformenden dynamischen Bewegung des Bearbeitungslaserstrahls; einer Position einer Fokalebene des Bearbeitungslaserstrahls; und einer chemischen Zusammensetzung des Prozessgases. Die Prozessgasquelle und/oder die Austrittsöffnung können ausgebildet sein, das Prozessgas als einen Prozessgasstrahl auf das Werkstück, insbesondere auf die Prozesszone, zu leiten.

Die Detektoreinrichtung kann ausgebildet sein, ein örtlich aufgelöstes Bild mit einer Pixelverteilung und darin integrierten Strahlungstemperaturwerten aufzunehmen. Die Detektoreinrichtung und/oder die Lichtstrahloptik können ausgebildet sein und/oder positioniert sein, das Prozesslicht in einem Winkel von 0° zur z-Richtung koaxial zum Bearbeitungslaserstrahl zu detektieren. Die Detektoreinrichtung kann ferner ausgebildet sein, aus den ermittelten Strahlungstemperaturwerten die Temperatur der Schmelzschicht über den spezifischen Emissionsgrad der Schmelzschicht und/oder über eine Abhängigkeit des spezifischen Emissionsgrads der Schmelzschicht von der Beobachtungsrichtung und/oder durch Quotientenbildung mehrerer, aus derselben Beobachtungsrichtung bei unterschiedlichen Wellenlängen erfasster Intensitäten des Prozesslichts abzuleiten. Die Detektoreinrichtung kann ein Quotientenpyrometer enthalten oder als ein Quotientenpyrometer ausgebildet sein.

Der mindestens eine Soll-Strahlungstemperaturwert kann mindestens einem optimierten Schneidqualitätsmerkmal entsprechen. Es kann eine Speichereinrichtung vorgesehen sein, die mit der Regelungseinrichtung datenleitend verbunden ist und/oder darin enthalten ist und den mindestens einen Soll-Strahlungstemperaturwert enthält. Die Regelungseinrichtung kann ausgebildet sein, aus dem mindestens einen ermittelten Strahlungstemperaturwert eine Weberzahl der Schmelzschicht und/oder eine Oberflächenspannung der Schmelzschicht und/oder ein Verhältnis der Oberflächenspannung zur Dichte der Schmelzschicht abzuleiten und durch Regeln des Strahlungstemperaturwertes dem mindestens einen optimierten Schneidqualitätsmerkmal entsprechend einzustellen. Das Schneidqualitätsmerkmal kann ausgewählt sein aus Tropfenbildung, Grattropfen, Gratperlen, Grat an der Unterseite des geschnittenen Werkstücks, einer Grathöhe an der Unterseite des geschnittenen Werkstücks, Riefen an einer Schnittkante des geschnittenen Werkstücks und einer Riefenfrequenz der Riefen an der Schnittkante.

Die Regelungseinrichtung kann ausgebildet sein, die strahlformende dynamische Bewegung des Bearbeitungslaserstrahls mittels einer Variation einer Bewegungsamplitude des mit dem beweglichen optischen Element bewegten Bearbeitungslaserstrahls, insbesondere im Bereich von mindestens ±0,5 mm, bevorzugt mindestens ± 1 mm, und/oder einer Variation einer Bewegungsfrequenz des mit dem beweglichen optischen Element bewegten Bearbeitungslaserstrahls, insbesondere im Bereich von 0,1 Hz bis 17 kHz, bevorzugt 10 Hz bis 15 kHz, mehr bevorzugt 100 Hz bis 4 kHz, einzustellen. Insbesondere kann die Regelungseinrichtung ausgebildet sein, eine Anpassung der strahlformenden dynamischen Bewegung des Bearbeitungslaserstrahls durch eine Variation mindestens einer Amplitude, mindestens einer Frequenz und/oder mindestens einer Phasenverschiebung des Bearbeitungslaserstrahls herbeizuführen. Dadurch kann eine dynamische Variation der Form des Bearbeitungslaserstrahls mit einer Fokalpunktoszillation erzeugt werden, die den Bearbeitungslaserstrahl durch eine spatiotemporale Verteilung der Laserenergie über die Werkstückoberfläche und/oder über eine Fokalebene des Bearbeitungslaserstrahls formt. Insbesondere kann die Regelungseinrichtung ausgebildet sein, die Frequenz und/oder die Amplitude in z-Richtung und/oder in Richtungen relativ zur z-Richtung zu variieren. Dabei können die Richtungen relativ zur z-Richtung zwei zueinander senkrechte m- und n-Richtungen sein, die wiederum senkrecht zur z-Richtung verlaufen. Beispielsweise kann die Regelungseinrichtung ausgebildet sein, die Frequenz und/oder die Amplitude in m-Richtung, n-Richtung und/oder z-Richtung, und/oder die Phasenverschiebung in n-Richtung relativ zur m-Richtung, bevorzugt in n-Richtung und z-Richtung relativ zur m-Richtung, zu variieren.. Dies ermöglicht eine zielgerichtete und exakte Regelung der Strahlungstemperaturwerte auf einen gewünschten Temperaturwertebereich und/oder auf eine erwünschte örtliche Verteilung derselben.

Die Regelungseinrichtung kann mit mindestens einem Element ausgewählt aus der Laserquelle, der Bewegungseinrichtung, einer Elementbewegungseinheit der Lichtstrahloptik zur Erzeugung der strahlformenden dynamischen Bewegung des Bearbeitungslaserstrahls, der Prozessgasquelle, insbesondere einer Gasdosiereinrichtung der Prozessgasquelle, und der Detektoreinrichtung datenleitend verbunden sein. Die Lichtstrahloptik kann mindestens ein unbewegliches optisches Element und/oder mindestens einen Aktuator als die Elementbewegungseinheit und mindestens ein mit dem Aktuator bewegliches optisches Element aufweisen.

Die mindestens eine Prozessgasquelle kann mindestens ein Gas bereitstellen, das mindestens ein für die Schmelzschicht oberflächenaktives Element oder Molekül enthält, insbesondere ein Sauerstoff enthaltendes Gas, ein Stickstoff enthaltendes Gas, ein Kohlenstoff enthaltendes Gas und/oder ein Schwefel enthaltendes Gas. Die Regelungseinrichtung kann ausgebildet sein, mittels der Prozessgasquelle, insbesondere mittels der Gasdosiereinrichtung der Prozessgasquelle, die chemische Zusammensetzung des Prozessgases durch Beimischen und/oder Dosieren des mindestens einen Gases einzustellen.

Die Regelungseinrichtung kann ausgebildet sein, den mindestens einen Soll-Strahlungstemperaturwert durch eine Kalibration von ermittelten Strahlungstemperaturwerten der Schmelzschicht auf mindestens ein optimales Schneidqualitätsmerkmal zu ermitteln. Die Regelungseinrichtung kann ferner ausgebildet sein, die ermittelten Strahlungstemperaturwerte auf eine Geometrie des Schnittspalts abzugleichen.

Eine Ausführungsform betrifft ein Computerprogrammprodukt, beinhaltend ein oder mehrere Programmmodule, die bewirken, dass die Vorrichtung nach einer der vorstehenden Ausführungsformen und Abwandlungen davon Schritte des Verfahrens nach einer der vorstehenden Ausführungsformen und Abwandlungen davon ausführt, insbesondere wenn die Programmmodule in eine Speichereinrichtung der Vorrichtung geladen werden.

Die Ausführungsformen und Abwandlungen der Vorrichtung zum Laserschneiden eines metallischen Werkstücks können in den Ausführungsformen und Abwandlungen des Verfahrens zum Laserschneiden eines metallischen Werkstücks genutzt werden. Mit den vorstehenden Ausführungsformen der Vorrichtung zum Laserschneiden eines metallischen Werkstücks können die gleichen Vorteile und Funktionen realisiert werden, wie mit den Ausführungsformen des Verfahrens zum Laserschneiden eines metallischen Werkstücks, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine Fotografie eines geschnittenen Werkstücks mit akzeptabler und ungenügender Schneidqualität;
- Fig. 2a: schematisch ein Ausführungsbeispiel eines Verfahrens zum Laserschneiden eines metallischen Werkstücks;
- Fig. 2b bis 2d: schematisch ein Ausführungsbeispiel einer Vorrichtung zum Laserschneiden eines metallischen Werkstücks;
- Fig. 2e: schematisch eine strahlformende dynamische Bewegung eines Bearbeitungslaserstrahls;
- Fig. 3a: eine beispielhafte Aufnahme einer mit dem Ausführungsbeispiel der Fig. 2a bis 2d erzeugten Prozesszone mit zugehöriger Temperaturskala;
- Fig. 3b bis 3c: Ausführungsbeispiele, bei denen ein Bearbeitungslaserstrahl in einem Winkel größer 0° zur Oberfläche eines Werkstücks, auch Werkstückoberfläche genannt, eingestrahlt wird; und
- Fig. 4 bis 7: Ausführungsbeispiele der Vorrichtung zum Laserschneiden eines metallischen Werkstücks.

Die Begriffe "Vorrichtung zum Laserschneiden eines metallischen Werkstücks" und "Vorrichtung zum Laserschneiden" sowie "Laserschneidvorrichtung" werden vorliegend synonym verwendet. Die Begriffe "Verfahren zum Laserschneiden eines metallischen Werkstücks" und "Verfahren zum Laserschneiden" werden vorliegend synonym verwendet. Das Material des metallischen Werkstücks enthält mindestens ein Metall, z.B. in einer Metalllegierung.

Ein mit den folgenden Ausführungsbeispielen durch Laserschneiden erzeugter Schnittspalt besitzt eine Schnittfront und mindestens eine Schnittkante. In allen Ausführungsformen kann die Laserquelle zum Erzeugen des Bearbeitungslaserstrahls derart ausgebildet sein, dass ein kontinuierlicher und/oder diskontinuierlicher, insbesondere gepulster, Bearbeitungslaserstrahl bereitgestellt wird. In Ausführungsformen wird das Verfahren zum Laserschneiden mit einer Steuereinrichtung gesteuert. In Ausführungsformen beinhaltet die Vorrichtung zum Laserschneiden eine Steuereinrichtung, mit der die Vorrichtung zum Laserschneiden und deren ansteuerbare Komponenten gesteuert und/oder geregelt werden. In dem Verfahren zum Laserschneiden wird der Bearbeitungslaserstrahl und/oder der Schneidkopf in Schneidrichtung über das Werkstück bewegt. Die Vorrichtung zum Laserschneiden enthält eine Bewegungseinrichtung, mit der der Schneidkopf und/oder der Bearbeitungslaserstrahl in Schneidrichtung mit einer Schneidgeschwindigkeit relativ gegenüber dem Werkstück, d.h. über das Werkstück bewegt werden kann.

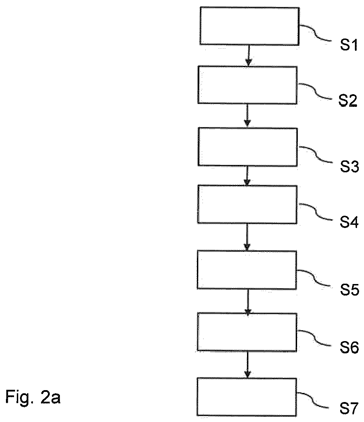

Fig. 2a bis 2e zeigen schematisch ein Ausführungsbeispiel, das ein Verfahren zum Laserschneiden mit den Schritten S1 bis S7 und eine Laserschneidvorrichtung 100 mit einem Schneidkopf 110 betrifft.

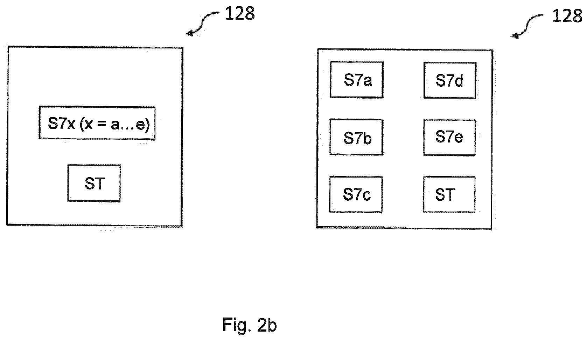

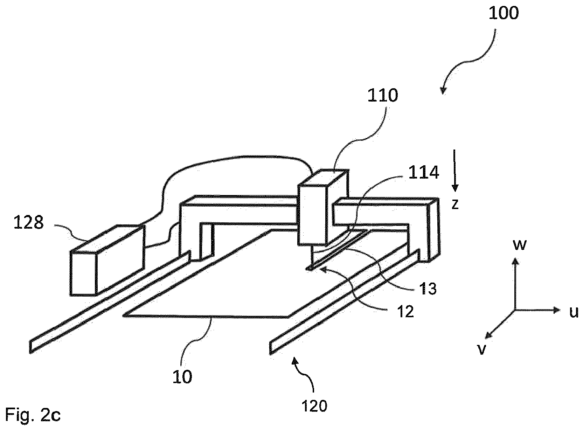

Die Laserschneidvorrichtung 100, im Folgenden auch Vorrichtung 100 genannt, ist in Fig. 2c perspektivisch dargestellt. Mit dem Schneidkopf 110 kann ein Bearbeitungslaserstrahl 114 in einer z-Richtung, die vorliegend mit der Ausbreitungsrichtung des Bearbeitungslaserstrahls übereinstimmt, auf ein metallisches Werkstück 10, z.B. ein Blech aus einer Edelstahllegierung, gerichtet werden. Das Werkstück 10 besitzt eine ebene Werkstückoberfläche, die durch v- und u-Richtungen definiert ist. Die Senkrechte auf die Werkstückoberfläche verläuft in einer w-Richtung. Die Laserschneidvorrichtung 100 beinhaltet eine Bewegungseinrichtung 120, mit der der Schneidkopf 110 und der darin geführte Laserstrahl 114 in Schneidrichtung in der v-Richtung und/oder der u-Richtung relativ gegenüber dem Werkstück 10 bewegt werden kann. Die Bewegungseinrichtung 120 enthält im vorliegend Beispiel eine Brücke, auf der der Schneidkopf 110 in die u-Richtung verschiebbar angeordnet ist, und einen Schlitten, auf der die Brücke in die v-Richtung bewegt werden kann. Mit der Bewegungseinrichtung 120 kann der Schneidkopf 110 auch senkrecht zum Werkstück 10, d.h. in w-Richtung, bewegt werden. Die Laserschneidvorrichtung 100 besitzt eine Regelungseinrichtung 128, die mit der Bewegungseinrichtung 120 und dem Schneidkopf 110 drahtgebunden oder drahtlos datenleitend verbunden ist. Im vorliegenden Beispiel ist die Regelungseinrichtung 128 eine zentrale Steuereinrichtung der Laserschneidvorrichtung 100. Alternativ kann die Regelungseinrichtung 128 in einer zentralen Steuereinrichtung der Vorrichtung 100 enthalten oder mit dieser verbunden sein. Wie Fig. 2b veranschaulicht, ist die Regelungseinrichtung 128 ausgebildet, mindestens einen Prozessparameter S7a bis S7e in dem mit der Laserschneidvorrichtung 100 auszuführenden Verfahren zum Laserschneiden zu regeln.

Fig. 2b zeigt links eine Ausführung der Regelungseinrichtung 128, die ausgebildet ist, einen oder mehrere der Prozessparameter S7x mit x = a bis e anzupassen, für Ausführungsbeispiele, in denen nur einer oder eine Auswahl der Prozessparameter für die Regelung erforderlich sind. Fig. 2b zeigt rechts eine Ausführung der Regelungseinrichtung 128, die ausgebildet ist, jeden der Prozessparameter S7x mit x = a bis e anzupassen, für Ausführungsbeispiele, in denen jeder der Prozessparameter S7a bis S7e für die Regelung eingesetzt werden kann. Ferner sind in der Regelungseinrichtung 128 in einer x-y-Ebene, z.B. einer Beobachtungsebene, örtlich aufgelöste Soll-Strahlungstemperaturwerte ST für das mit der Laserschneidvorrichtung 100 auszuführende Verfahren gespeichert. Die Regelungseinrichtung 128 kann hierfür eine Speichereinrichtung 129 enthalten.

Die Soll-Strahlungstemperaturwerte ST können Erfahrungswerten von Strahlungstemperaturwerten zum Erzeugen optimaler Schneidqualitäten entsprechen und/oder können in einem Kalibrierungsverfahren, z.B. vor der Durchführung des Verfahrens, anhand von geschnittenen Werkstücken 10 mit optimaler Schneidqualität ermittelt und gespeichert werden. Die Soll-Strahlungstemperaturwerte ST korrelieren mit einem oder mehreren optimalen Schneidqualitätsmerkmalen, z.B. einer reduzierten Gratbildung an der Unterseite des Werkstücks oder einer reduzierten Riefenbildung an der Schnittkante.

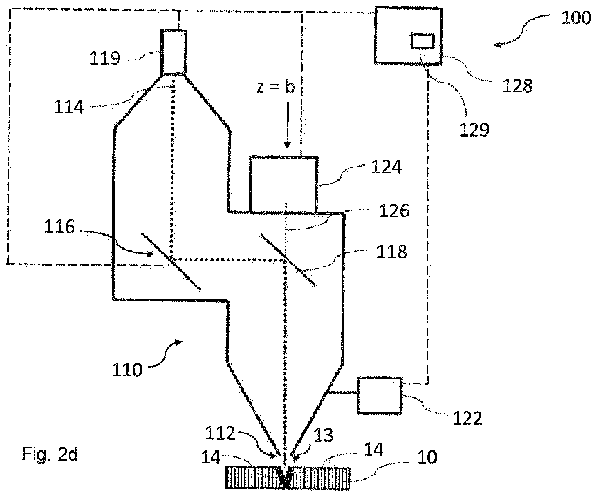

Fig. 2d stellt weitere Komponenten der Laserschneidvorrichtung 100 sowie den Schneidkopf 110 schematisch in einer Querschnittsansicht dar. Der Schneidkopf 110 besitzt eine Austrittsöffnung 112 für den Bearbeitungslaserstrahl 114. Die Laserschneidvorrichtung 100 besitzt eine Laserquelle 119, z.B. einen Faserlaser, zum Erzeugen des Bearbeitungslaserstrahls 114, die an dem Schneidkopf 110 angekoppelt ist. Alternativ kann die Laserquelle 119 über eine Transportfaser und/oder an einer anderen Stelle mit dem Schneidkopf 110 verbunden sein. Die Laserquelle 119 ist zum Erzeugen des Bearbeitungslaserstrahls 114 mit einer Wellenlänge von mindestens 800nm und einer Leistung von mindestens 1 kW ausgebildet.

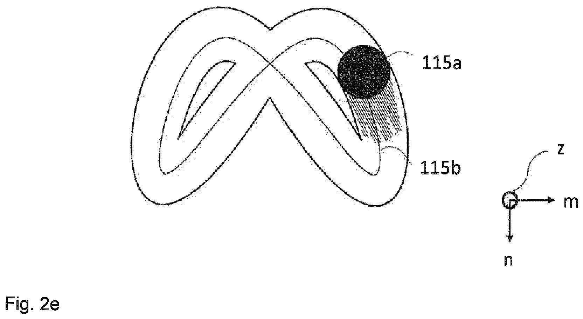

Der Schneidkopf 110 enthält eine Lichtstrahloptik 116, 118. Die Lichtstrahloptik enthält im vorliegenden Beispiel ein bewegliches optisches Element 116 und ein unbewegliches optisches Element 118. Das bewegliche optische Element 116 besitzt eine spiegelnde Oberfläche, die für den Bearbeitungslaserstrahl 114 reflektiv ist. Die spiegelnde Oberfläche des optischen Elements 116 kann beispielsweise mit einer Frequenz von 10 Hz bis 15 kHz relativ zum auftreffenden Bearbeitungslaserstrahl 114 dynamisch bewegt werden, um eine strahlformende dynamische Bewegung, auch DBS (Dynamic Beam Shaping) genannt, des Bearbeitungslaserstrahls 114 relativ, z.B. senkrecht, zu seiner Ausbreitungsrichtung, d.h. zur z-Achse, zu bewirken. Ein Beispiel dafür ist in Fig. 2e schematisch veranschaulicht. Darin ist eine strahlformende dynamische Bewegung eines Laserspots 115a des Bearbeitungslaserstrahls 114 dargestellt, der auf einer schleifenförmigen zentralen Bewegungstrajektorie 115b dynamisch in einer m-n-Ebene senkrecht zur z-Richtung bewegt wird. Alternativ oder zusätzlich kann die spiegelnde Oberfläche des optischen Elements 116 beispielsweise so verformt werden, dass die Position der Fokalebene des Bearbeitungslaserstrahls 114 entlang der z-Richtung relativ zum Werkstück 10, im vorliegenden Beispiel beispielsweise ein Abstand und/oder eine Neigung zur u-v-Ebene der Werkstückoberfläche, variiert wird. Das unbewegliche optische Element 118 ist ein dichroitischer Spiegel, der für den Bearbeitungslaserstrahl 114 reflektiv ist und für das Prozesslicht 126 mindestens teilweise transparent ist. Die Lichtstrahloptik kann weitere optische Elemente, wie z.B. eine Kollimationslinse und/oder eine Fokussierlinse (jeweils nicht gezeigt), enthalten. Die optischen Elemente 116 und 118 der Lichtstrahloptik sind im Strahlengang des Bearbeitungslaserstrahls 114 derart angeordnet und ausgerichtet, dass der Bearbeitungslaserstrahl 114 in der z-Richtung durch die Austrittsöffnung 112 geleitet, insbesondere umgelenkt, wird. Das optische Element 118 der Lichtstrahloptik ist ferner im Strahlengang des Prozesslichts 126 angeordnet.

An dem Schneidkopf 110 sind ferner eine Detektoreinrichtung 124 und mindestens eine Prozessgasquelle 122 angekoppelt.

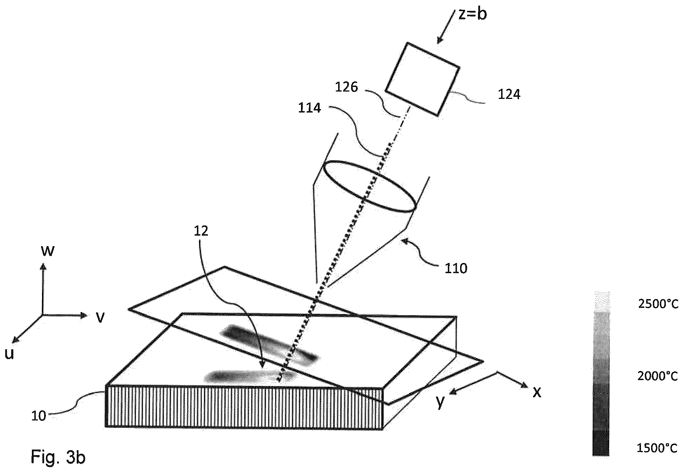

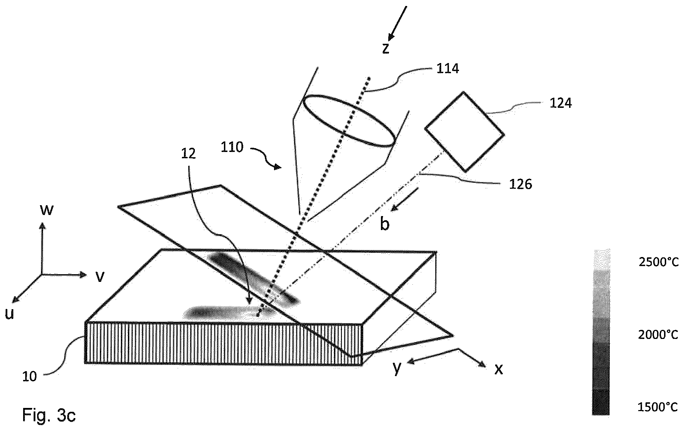

Die Detektoreinrichtung 124 ist als Kamera enthaltend einen Strahlungssensor ausgebildet, der für Licht in einem Wellenlängenbereich kleiner 1000nm, beispielsweise im sichtbaren Wellenlängenbereich und/oder im nahen Infrarot, empfindlich ist. Es kann eine monochromatische Kamera mit einem CMOS- oder CCD-Chip oder mit einem Diodenarray als Strahlungssensor eingesetzt werden. Der Strahlungssensor der Detektoreinrichtung 124 ist temperaturkalibriert. Dies bedeutet, dass die Intensität des Prozesslichts, das bevorzugt in einem schmalen Spektralbereich detektiert wird, einer Strahlungstemperatur zugeordnet werden kann. Eine Wärmestrahlung, auch thermische Strahlung genannt, nimmt proportional mit der physikalischen Temperatur eines Körpers zu. Das mit der Detektoreinrichtung 124 beobachtete Prozesslicht 126 entspricht im Wesentlichen thermischer Strahlung. Wird ein Schwarzkörper mit einem Emissionsgrad von 1 beobachtet, so entspricht die detektierte Strahlungstemperatur der physikalischen Temperatur. Somit ist die Detektoreinrichtung ausgebildet, ein örtlich aufgelöstes Bild mit einer Pixelverteilung und darin integrierten Strahlungstemperaturwerten aufzunehmen. Daher ist die Detektoreinrichtung 124 ausgebildet, ein im Werkstück 10 durch eine Wechselwirkung mit dem Bearbeitungslaserstrahl 114 erzeugtes Prozesslicht 126 zu detektieren und daraus Strahlungstemperaturwerte zu ermitteln. Vorliegend handelt es sich bei dem Prozesslicht 126 um thermische Strahlung, d.h. Wärmestrahlung, einer Schmelzschicht 14 aus einer flüssigen Metallschmelze, die auf dem Werkstück in der Prozesszone beim Laserschneiden entsteht und Werkstückmaterial enthält. Die Detektoreinrichtung 124 ist in diesem Beispiel am Schneidkopf 110 in einer Position angekoppelt, die es ermöglicht, das vom Werkstück 10 durch die Austrittsöffnung 112 emittierte Prozesslicht 126 in einer Beobachtungsrichtung b koaxial mit dem auf dem Werkstück 10 auftreffenden Bearbeitungslaserstrahl 114 zu detektieren. Dabei stimmt die Beobachtungsrichtung b mit der z-Richtung überein, wie in Fig. 2d und 3b veranschaulicht ist. In alternativen Beispielen ist die Detektoreinrichtung 124 in der Vorrichtung 100 und/oder am oder im Schneidkopf 110 außeraxial zum Bearbeitungslaserstrahl 114 in einer Position vorgesehen, die es ermöglicht, das emittierte Prozesslicht 126 in der Beobachtungsrichtung b in einem Winkel von größer 0° bis z.B. 10° zur z-Richtung zu detektieren, wie z.B. in Fig. 3c veranschaulicht ist.

Die Prozessgasquelle 122 stellt ein Prozessgas bereit und ist fluid-leitend an den Schneidkopf 110 angekoppelt, wie in Fig. 2d dargestellt. Das Prozessgas kann ein Gas beinhalten, das ein für die Schmelzschicht 14, in Abhängigkeit vom Material der Schmelzschicht 14, oberflächenaktives Element oder Molekül enthält. Es kann auch ein Gas enthalten, das bei einer Wechselwirkung, z.B. einer Reaktion, mit dem Material der Oberfläche der Schmelzschicht 14 und/oder bei einer Wechselwirkung mit dem Bearbeitungslaserstrahl 114 ein für die Schmelzschicht 14 oberflächenaktives Element und/oder Molekül freisetzt. Das enthaltene oder entstehende oberflächenaktive Element und/oder Molekül wechselwirkt mit der Oberfläche der Schmelzschicht 14 und/oder mit dem Material der Schmelzschicht 14 und verändert deren Oberflächenspannung. Z.B. enthält das Prozessgas N₂, O₂, CO, CO₂ und/oder ein Schwefelhaltiges Gas.

Die Regelungseinrichtung 128 ist mit mindestens einer Komponente der Laserschneidvorrichtung 100 ausgewählt aus der Laserquelle 119, der Bewegungseinrichtung 120, dem beweglichen optischen Element 116 der Lichtstrahloptik, der Prozessgasquelle 122 und der Detektoreinrichtung 124 drahtlos und/oder drahtgebunden datenleitend verbunden, was in Fig. 2d mit gestrichelten Verbindungslinien veranschaulicht ist. Die Komponenten, die mit der Regelungseinrichtung 128 datenleitend verbunden sind, sind ansteuerbar ausgebildet.

Mit der Laserschneidvorrichtung 100 wird ein Verfahren zum Laserschneiden ausgeführt, wie in Fig. 2a schematisch dargestellt. Im Betrieb der Laserschneidvorrichtung 100 wird das Prozessgas in einem Schritt S4 mit der Prozessgasquelle 122 in den Schneidkopf 110 geleitet und durch die Austrittsöffnung 112 auf das metallische Werkstück 10 gerichtet. In einem Schritt S1 wird der Bearbeitungslaserstrahl 114 mit der Laserquelle 119 erzeugt. Die Lichtstrahloptik 116, 118 des Schneidkopfs 110 leitet den Bearbeitungslaserstrahl 114 in einer z-Richtung durch die Austrittsöffnung 112 auf das Werkstück 10, wobei eine Prozesszone 12 im Werkstück erzeugt wird. Dies geschieht in einem Schritt S2. Mit der Bewegungseinrichtung 120 wird der Bearbeitungslaserstrahl 114 und die Prozesszone 12 in einem Schritt S3 mit einer Schneidgeschwindigkeit über das Werkstück 10 bewegt. Es wird ein Schnittspalt 13 erzeugt, wobei in der Prozesszone 12 eine Schmelzschicht 14 aus Werkstückmaterial entsteht. Dabei wird durch eine Wechselwirkung mit dem Bearbeitungslaserstrahl 114 das Prozesslicht 126 erzeugt und von der Prozesszone 12 zumindest teilweise durch die Austrittsöffnung 112 in den Schneidkopf 110 emittiert. Das Prozesslicht 126 gelangt durch den dichroitischen Spiegel 118 in die Detektoreinrichtung 124 und wird dort in einem Schritt S5 detektiert.

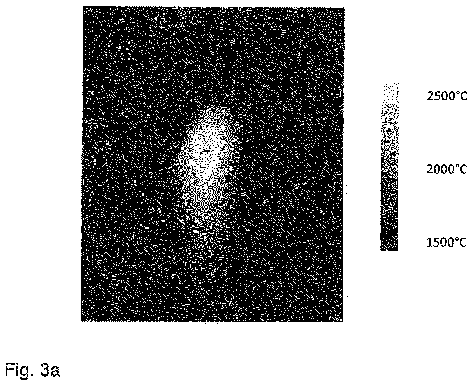

In einem Schritt S6 wird mit der Detektoreinrichtung 124 die Strahlungstemperatur in der Prozesszone 12 anhand des detektierten Prozesslichts 126 ermittelt. Ein mit der Detektoreinrichtung 124 erhaltenes beispielhaftes zum Bearbeitungslaserstrahl 114 koaxial aufgenommenes Bild der Prozesszone 12 mit zugehöriger Temperaturskala ist in Fig. 3a wiedergegeben. Dabei werden Strahlungstemperaturwerte der Schmelzschicht 14 aus einer Beobachtungsrichtung b in einem Winkel von 0° zur z-Richtung und projiziert auf die x-y-Ebene senkrecht zur Beobachtungsrichtung b örtlich aufgelöst ermittelt. Dies gilt für Varianten des Verfahrens, in denen der Bearbeitungslaserstrahl 114 im Wesentlichen senkrecht, wie in Fig. 2c und 2d gezeigt, oder in einem anderen Winkel zur Oberfläche des Werkstücks 10, wie in Fig. 3b dargestellt ist, eingestrahlt wird und die Beobachtungsrichtung b koaxial zum eingestrahlten Bearbeitungslaserstrahl 114 verläuft. Dabei ist die Detektoreinrichtung 124 so angeordnet und/oder die Lichtstrahloptik 116, 118 so ausgebildet, dass die z-Richtung und die Beobachtungsrichtung b übereinstimmen. In anderen Beispielen des Verfahrens werden, wie in Fig. 3c veranschaulicht ist, Strahlungstemperaturwerte der Schmelzschicht 14 aus einer Beobachtungsrichtung b in einem Winkel größer 0° bis 80°zur z-Richtung und projiziert auf die x-y-Ebene senkrecht zur Beobachtungsrichtung b örtlich aufgelöst ermittelt. Dabei ist die Detektoreinrichtung 124 so angeordnet und/oder die Lichtstrahloptik 116, 118 so ausgebildet, dass die z-Richtung und die Beobachtungsrichtung b einen Winkel größer 0° einschließen. Die x-y- Ebene kann als Beobachtungsebene verstanden werden.

In einem anderen Beispiel (nicht gezeigt) sind die Beispiele der Fig. 3b und 3c kombiniert. Dabei werden Strahlungstemperaturwerte der Schmelzschicht 14 aus zwei Beobachtungsrichtungen b in einem Winkel von 0° und in einem Winkel größer 0° bis 80°zur z-Richtung und jeweils projiziert auf eine x-y-Ebene senkrecht zur jeweiligen Beobachtungsrichtung b örtlich aufgelöst ermittelt. Hierfür sind in und/oder am Schneidkopf 110 zwei Detektoreinrichtungen 124 in entsprechenden Positionen vorgesehen und/oder die Lichtstrahloptik 116, 118 ist so ausgebildet, dass bei der einen Detektoreinrichtung 124 die z-Richtung und die Beobachtungsrichtung b übereinstimmt und bei der anderen Detektoreinrichtung 124 die z-Richtung und die Beobachtungsrichtung b einen Winkel größer 0° einschließen. Beispielsweise ist die andere Detektoreinrichtung 124 neben oder außen an dem Schneidkopf 110 vorgesehen. Dieses Ausführungsbeispiel ermöglicht, mittels einer Abhängigkeit des spezifischen Emissionsgrads des Materials der Schmelzschicht von der Beobachtungsrichtung, durch Ermittlung mehrerer Strahlungstemperaturwerte der Schmelzschicht aus mehreren unterschiedlichen Beobachtungsrichtungen die Temperatur abzuleiten.

In einem Schritt S7 des Verfahrens wird mittels der Regelungseinrichtung 128 eine Regelung durchgeführt. Befinden sich die ermittelten, örtlich aufgelösten Strahlungstemperaturwerte nicht jeweils in einem gewünschten Wertebereich und/oder in einer erwünschten örtlichen Verteilung, die durch in der x-y-Ebene örtlich aufgelöste, in der Regelungseinrichtung 128 gespeicherte Soll-Strahlungstemperaturwerte ST vorgegeben sind, wird eine Regelung auf die Soll-Strahlungstemperaturwerte ST durchgeführt, indem einer oder mehrere der Prozessparameter S7a bis S7e angepasst wird. Dabei wird mindestens einer der ermittelten Strahlungstemperaturwerte mittels der Regelungseinrichtung 128 auf den in der x-y-Ebene dem jeweiligen Strahlungstemperaturwert entsprechenden, in der x-y-Ebene örtlich aufgelösten Soll-Strahlungstemperaturwert ST geregelt. Dies geschieht durch Anpassen mindestens eines der Prozessparameter S7a bis S7e des Verfahrens zum Laserschneiden. Bei den Prozessparametern S7a bis S7e handelt es sich um die Leistung S7a der Laserquelle 119, der Schneidgeschwindigkeit S7b, einer mit dem beweglichen optischen Element 116 erzeugten, der Schneidbewegung überlagerten, strahlformenden dynamischen Bewegung S7c des Bearbeitungslaserstrahls 114, einer Position S7d einer Fokalebene des Bearbeitungslaserstrahls 144 und einer chemischen Zusammensetzung S7e des auf die Prozesszone 12 geleiteten Prozessgases. Mit anderen Worten, einer oder mehrere der genannten Prozessparameter wird mittels der Regelungseinrichtung 128 während des Laserschneidens kontinuierlich oder diskontinuierlich solange variiert, bis die ermittelten Strahlungstemperaturwerte jeweils in dem gewünschten Wertebereich und/oder in der erwünschten örtlichen Verteilung liegen.

Für eine Abweichung der ermittelten, örtlich aufgelösten Strahlungstemperaturwerte von dem gewünschten Wertebereich und/oder der erwünschten örtlichen Verteilung können Toleranzbereiche berücksichtigt werden. Werden von der Detektoreinrichtung 124 bei der Beobachtung z.B. Maxima der Strahlungstemperaturwerte ermittelt, kann ein Toleranzbereich von 3% berücksichtigt werden. Wird z.B. ein oder mehrere über eine Fläche integrierte Strahlungstemperaturwerte ermittelt, kann ein Toleranzbereich von 2% vorgegeben sein. Es können zudem Toleranzbereiche in Abhängigkeit von der-Leistung der Laserquelle 119 berücksichtigt werden. Bei der Leistung S7a kann es sich um die Spitzenleistung und/oder die durchschnittliche Leistung der Laserquelle 119 handeln.

Die Reihenfolge der in Fig. 2a dargestellten Schritte S1 bis S7 kann variiert werden, z.B. können mehrere Schritte gleichzeitig durchgeführt werden.

Fig. 3a zeigt beispielhaft ein beim Laserschneiden einer Edelstahllegierung erzeugtes und mit der Detektoreinrichtung 124 koaxial zum Bearbeitungslaserstrahl 114 aufgenommenes Prozesslicht 126, mit Strahlungstemperaturwerten zwischen 1500 und 2500 °C. Befinden sich die mit der Detektoreinrichtung 124 gemessenen, örtlich aufgelösten Strahlungstemperaturwerte nicht im gewünschten Bereich und/oder in einer erwünschten örtlichen Verteilung, werden diese mit dem Bearbeitungslaser und/oder dem Prozessgas beeinflusst. Dabei sind beispielsweise folgende Vorgehensweisen einzeln oder in Kombination möglich, um die Schneidqualität zu optimieren: a) Die im Verfahren für eine optimale Schneidqualität gewünschten Strahlungstemperaturwerte werden durch Variation der Leistung der Laserquelle 119 und/oder der Schneidgeschwindigkeit eingestellt. Dies kann sowohl mit einem gepulsten wie auch mit einem kontinuierlich erzeugten Bearbeitungslaserstrahl 114 umgesetzt werden. b) Der Bearbeitungslaserstrahl 114 wird mittels dynamischem Strahlformen (DBS) gezielt so geformt und/oder die Position der Fokalebene des Bearbeitungslaserstrahls 114 wird so verschoben, dass die Strahlungstemperatur und/oder deren örtliche Verteilung optimal ausfällt. c) Dem Prozessgas wird ein für die Schmelzschicht oberflächenaktives Gas beigemischt und/oder der Anteil eines oberflächenaktiven Gases im Prozessgas wird eingestellt. Das oberflächenaktive Gas wechselwirkt und/oder reagiert mit der Metallschmelze in der Schmelzschicht 14 und reduziert deren Oberflächenspannung. Die Oberflächenspannung ist wiederum über die Temperatur der Schmelze erfassbar. Durch Regeln der Prozessgaszusammensetzung kann die Schmelze auf der optimalen Temperatur und somit auf optimaler Oberflächenspannung gehalten werden.

Das Verfahren zum Laserschneiden ermöglicht eine Optimierung der Schneidqualität, indem während des Laserschneidens eine Messung der Temperatur der Schmelzschicht in Echtzeit durchgeführt und die Temperatur mittels Prozessparametern in Echtzeit geregelt wird. Es werden dabei insbesondere Prozessparameter eingesetzt, die den Bearbeitungslaserstrahl und/oder das Prozessgas beeinflussen. So kann die Oberflächenspannung der Schmelzschicht über eine Messung der Temperatur der Schmelzschicht in einem Regelkreis dahingehend verändert werden, dass eine gute Schneidqualität resultiert. Auf diese Weise wird die Temperatur der Schmelzschicht und damit der Schmelze des Materials des Werkstücks genutzt, um die Schneidqualität zu verbessern, insbesondere um die Gratbildung und die Rauheit an der Schnittkante des geschnittenen Werkstücks zu reduzieren.

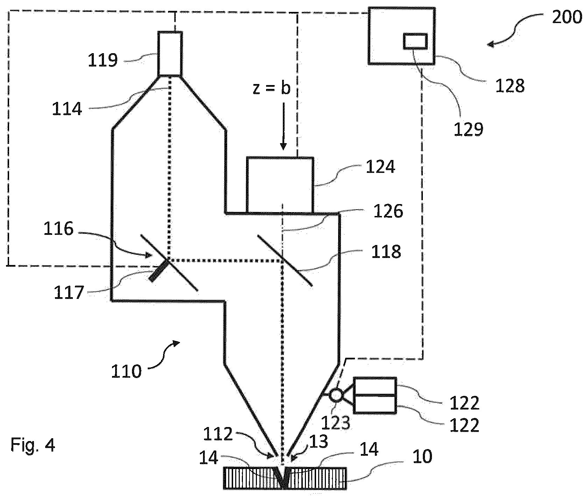

In Fig. 4 ist als ein weiteres Beispiel eine Laserschneidvorrichtung 200 mit beispielhaften Ausgestaltungen des beweglichen optischen Elements 116 der Lichtstrahloptik und der Prozessgasquelle 122 schematisch dargestellt.

In der Ausgestaltung der Laserschneidvorrichtung 200 der Fig. 4 besitzt das bewegliche optische Element 116 mindestens eine Elementbewegungseinheit 117, z.B. mindestens einen Aktuator, zur Erzeugung der strahlformenden dynamischen Bewegung des Bearbeitungslaserstrahls. Das bewegliche optische Element 116 enthält mindestens eine spiegelnde Oberfläche, die mit der Elementbewegungseinheit 117 mit einer Frequenz von 10 Hz bis 15 kHz relativ zum auftreffenden Bearbeitungslaserstrahl 114 dynamisch bewegt werden kann, um eine strahlformende dynamische Bewegung, auch DBS (Dynamic Beam Shaping) genannt, des Bearbeitungslaserstrahls 114 z.B. senkrecht zu seiner Ausbreitungsrichtung, d.h. der z-Richtung, zu bewirken. Das bewegliche optische Element 116 kann z.B. als ein zumindest teilweise beweglicher Spiegel ausgebildet sein. Der Spiegel 116 kann beispielsweise dynamisch orientierbar, z.B. verkippbar, ausgebildet sein. Der Spiegel 116 kann alternativ Teil eines Galvanometer-Scanners sein. Ferner kann der Spiegel 116 um eine Achse rotierbar sein, die mit einer spiegelnden Ebene des Spiegels einen Winkel einschließt, und derart orientierbar sein, dass der Winkel größer oder kleiner 90° ist. Der Spiegel 116 kann als ein Segmentspiegel mit mehreren Spiegelsegmenten, die jeweils dynamisch orientierbar sind, ausgebildet sein. Die spiegelnde Oberfläche des optischen Elements 116 kann dynamisch verformbar sein, z.B. kann das optische Element 116 als ein mit mindestens einem Piezo-Aktuator verformbarer Spiegel, ein bimorph deformierbarer Spiegel, ein auf MEMS- oder MOEMS- Basis deformierbarer Spiegel und/oder ein auf Schwingspulen-Basis deformierbarer Spiegel sein. In einem anderen Beispiel ist das bewegliche optische Element 116 eine optische Einheit, insbesondere eine refraktive optische Einheit und/oder ein außeraxialer (Off-Axis-) Parabolspiegel, die mittels mindestens der Elementbewegungseinheit 117 zumindest teilweise dynamisch beweglich ist, insbesondere eine dynamisch beweglich gehaltene Laserfaserendeinheit. Die Elementbewegungseinheit 117 ist ansteuerbar und kann mindestens ein Element ausgewählt aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einer Mehrzahl davon und/oder einer Kombination davon aufweisen. Die Regelungseinrichtung 128 ist im vorliegenden Beispiel mit der Elementbewegungseinheit 117 datenleitend verbunden. In Fig. 4 ist die Speichereinrichtung 129 der Regelungseinrichtung 128 dargestellt.

Im Beispiel der Fig. 4 sind mehrere Prozessgasquellen 122 vorgesehen, um eine Mischung mehrerer Gase als das Prozessgas im Schneidkopf 110 bereitzustellen. Die Prozessgasquellen 122 sind in diesem Fall über eine Gasdosiereinrichtung 123, z.B. ein Mischventil, fluidleitend mit dem Schneidkopf 110 verbunden. Die Regelungseinrichtung 128 ist mit der Gasdosiereinrichtung 123 datenleitend verbunden und stellt diese ein, um die chemische Zusammensetzung des Prozessgases zu regeln. Zum Beispiel wird für ein Schmelzschneiden, beispielsweise eines Werkstücks aus einer Edelstahllegierung, eine Gasmischung aus Stickstoff N₂ und Sauerstoff O₂ bereitgestellt, wobei der Hauptanteil des Prozessgases Stickstoff ist und der Anteil an Sauerstoff als oberflächenaktives Molekül zur Anpassung der Oberflächenspannung der Schmelzschicht 14 variiert wird. In einem anderen Beispiel wird für ein Brennschneiden, beispielsweise eines Werkstücks aus einer Edelstahllegierung, eine Gasmischung aus Sauerstoff O₂ und Kohlendioxid CO₂ bereitgestellt, wobei der Hauptanteil des Prozessgases Sauerstoff ist und der Anteil von Kohlendioxid als ein oberflächenaktives Molekül bzw. als ein oberflächenaktive Elemente enthaltendes Molekül zur Anpassung der Oberflächenspannung der Schmelzschicht 14 variiert wird.

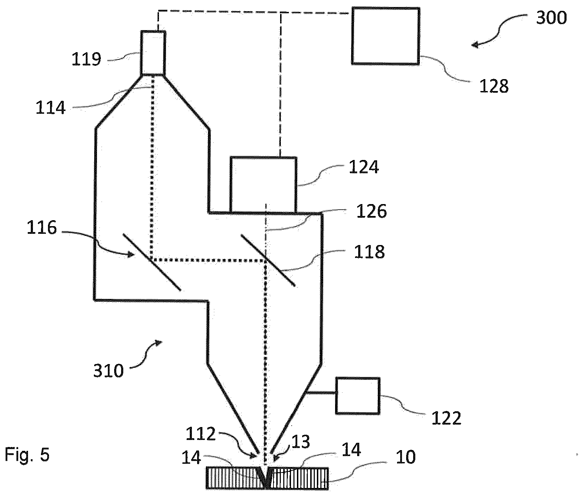

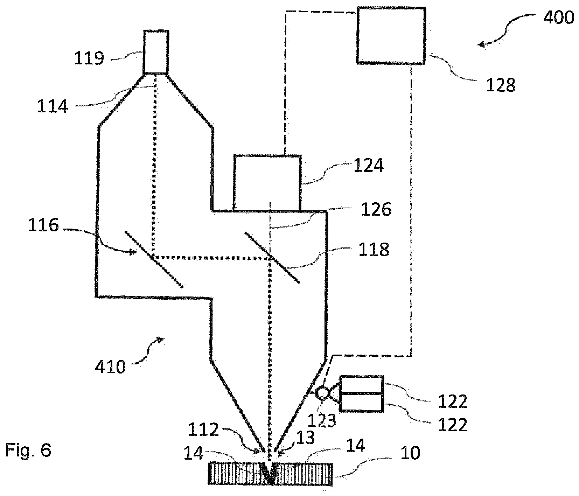

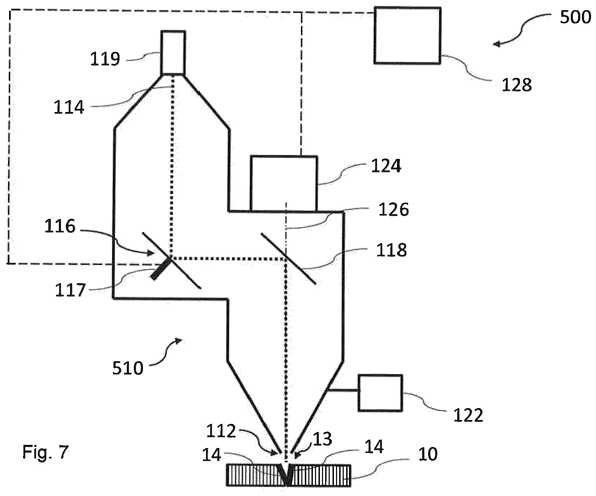

In anderen Beispielen ist die Laserschneidvorrichtung 100 so ausgebildet, dass für die Regelung lediglich einer oder eine beliebige Kombination der Prozessparameter S7a bis S7e im Schritt S7 des Verfahrens mittels der Regelungseinrichtung 128 während des Laserschneidens kontinuierlich oder diskontinuierlich solange variiert wird/werden, bis die ermittelten Strahlungstemperaturwerte jeweils in dem gewünschten Wertebereich und/oder in der erwünschten örtlichen Verteilung liegen, um eine optimale Schneidqualität zu erhalten. In derartigen Beispielen ist die Regelungseinrichtung 128 daher lediglich mit den anzusteuernden Komponente(n) verbunden, die für die betreffende Regelung der Laserschneidvorrichtung 100 eingesetzt wird. Gemäß einem Beispiel ist die Regelungseinrichtung 128 der Vorrichtung 100 für die Regelung nur mit der Detektoreinrichtung 124 und der Bewegungseinrichtung 120 datenleitend verbunden, um die Schneidgeschwindigkeit S7b anzupassen. In einem anderen Beispiel einer Laserschneidvorrichtung 300, das in Fig. 5 schematisch gezeigt ist, ist die Regelungseinrichtung 128 für die Regelung mit der Detektoreinrichtung 124 und der Laserquelle 119 datenleitend verbunden, um die Leistung S7a der Laserquelle 119 anzupassen. In einem weiteren Beispiel einer Laserschneidvorrichtung 400, das in Fig. 6 schematisch gezeigt ist, ist die Regelungseinrichtung 128 für die Regelung mit der Detektoreinrichtung 124 und der Prozessgasquelle 122, insbesondere der Gasdosiereinrichtung 123, datenleitend verbunden, um die chemische Zusammensetzung S7e des auf die Prozesszone 12 geleiteten Prozessgases anzupassen. Gemäß einem Beispiel einer Laserschneidvorrichtung 500, das in Fig. 7 schematisch gezeigt ist, ist die Regelungseinrichtung 128 für die Regelung mit der Detektoreinrichtung 124 und dem beweglichen optischen Element 116 der Lichtstrahloptik und/oder mit dessen Elementbewegungseinheit 117 datenleitend verbunden, um für die Regelung mit dem beweglichen optischen Element 116 eine der Schneidbewegung überlagerte, strahlformende dynamische Bewegung S7c des Bearbeitungslaserstrahls 114 zu erzeugen und/oder die Position S7d der Fokalebene des Bearbeitungslaserstrahls 144 relativ zum Werkstück 10 anzupassen. Die genannten Beispiele mit einer Regelung einer reduzierten Anzahl von Prozessparametern können beliebig kombiniert werden. In den Figuren 5 bis 7 ist die Regelungseinrichtung 128 als Einheit dargestellt, die von der zentralen Steuereinrichtung (nicht gezeigt) der Laserschneidvorrichtungen 300 bis 500 getrennt vorgesehen ist. In diesen Fällen kann die Regelungseinrichtung 128 mit der zentralen Steuereinrichtung datenleitend verbunden sein.

### Bezuaszeichenliste

- 10: Werkstück
- 11: Schnittkante
- 11a: Bereich
- 11b: Bereich
- 12: Prozesszone
- 13: Schnittspalt
- 14: Schmelzschicht
- 100: Vorrichtung zum Laserschneiden eines metallischen Werkstücks; Laserschneidvorrichtung
- 110: Schneidkopf
- 112: Austrittsöffnung
- 114: Bearbeitungslaserstrahl
- 115a: Laserspot
- 115b: zentrale Bewegungstrajektorie
- 116: Lichtstrahloptik, optisches Element
- 117: Elementbewegungseinheit
- 118: Lichtstrahloptik, optisches Element
- 119: Laserquelle
- 120: Bewegungseinrichtung
- 122: Prozessgasquelle
- 123: Gasdosiereinrichtung
- 124: Detektoreinrichtung
- 126: Prozesslicht
- 128: Regelungseinrichtung
- 129: Speichereinrichtung
- 200: Vorrichtung zum Laserschneiden eines metallischen Werkstücks; Laserschneidvorrichtung
- 300: Vorrichtung zum Laserschneiden eines metallischen Werkstücks; Laserschneidvorrichtung
- 400: Vorrichtung zum Laserschneiden eines metallischen Werkstücks; Laserschneidvorrichtung
- 500: Vorrichtung zum Laserschneiden eines metallischen Werkstücks; Laserschneidvorrichtung
- b: Beobachtungsrichtung
- m: Richtung,
- n: Richtung
- S1: Schritt
- S2: Schritt
- S3: Schritt
- S4: Schritt
- S5: Schritt
- S6: Schritt
- S7: Schritt
- S7x: Prozessparameter mit x = a bis e
- S7a: Leistung der Laserquelle
- S7b: Schneidgeschwindigkeit
- S7c: strahlformende dynamische Bewegung des Bearbeitungslaserstrahls
- S7d: Position einer Fokalebene des Bearbeitungslaserstrahls
- S7e: chemische Zusammensetzung des auf die Prozesszone geleiteten Prozessgases
- ST: Soll-Strahlungstemperaturwert
- u: Richtung
- v: Richtung
- w: Richtung
- W: Weberzahl
- x: Richtung der x-y-Ebene, der Beobachtungsebene
- y: Richtung der x-y-Ebene, der Beobachtungsebene
- z: Richtung des Bearbeitungslaserstrahls

## Patentansprüche

1. Verfahren zum Laserschneiden eines metallischen Werkstücks (10), beinhaltend Erzeugen eines Bearbeitungslaserstrahls (114) mit einer Laserquelle (119) (S1); Leiten des Bearbeitungslaserstrahls in einer z-Richtung auf das Werkstück unter Erzeugung einer Prozesszone (12) im Werkstück (S2);
Bewegen des Bearbeitungslaserstrahls (114) und der Prozesszone (12) über das Werkstück mit einer Schneidgeschwindigkeit zur Erzeugung eines Schnittspalts (13),
wobei in der Prozesszone eine Schmelzschicht (14) entsteht (S3);
Leiten eines Prozessgases auf die Prozesszone (S4);
und
Detektieren eines von der Prozesszone (12) emittierten Prozesslichts (126), das im Werkstück durch eine Wechselwirkung mit dem Bearbeitungslaserstrahl (114) erzeugt wird, und Ermitteln der Strahlungstemperatur in der Prozesszone anhand des detektierten Prozesslichts (126) (S5);
**dadurch gekennzeichnet, dass**
Strahlungstemperaturwerte der Schmelzschicht (14) aus mindestens einer Beobachtungsrichtung (b) in einem Winkel von 0° bis 80°, bevorzugt 0° bis 60°, mehr bevorzugt 0° bis 45°, zur z-Richtung und projiziert auf eine x-y-Ebene senkrecht zu der Beobachtungsrichtung (b) örtlich aufgelöst ermittelt werden (S6); und
mindestens einer der ermittelten Strahlungstemperaturwerte auf einen in der x-y-Ebene dem jeweiligen Strahlungstemperaturwert entsprechenden, in der x-y-Ebene örtlich aufgelösten Soll-Strahlungstemperaturwert (ST) geregelt wird durch Anpassen mindestens eines Prozessparameters (S7a bis S7e) des Verfahrens (S7);
wobei der mindestens eine Prozessparameter ausgewählt ist aus
- einer Leistung der Laserquelle (S7a);
- der Schneidgeschwindigkeit (S7b);
- einer der Schneidbewegung überlagerten, strahlformenden dynamischen Bewegung des Bearbeitungslaserstrahls (S7c);
- einer Position einer Fokalebene des Bearbeitungslaserstrahls (S7d); und
- einer chemischen Zusammensetzung des auf die Prozesszone geleiteten Prozessgases (S7e).

2. Verfahren nach Anspruch 1,
wobei das Prozesslicht (126) in einem Winkel von 0° zur z-Richtung koaxial zum Bearbeitungslaserstrahl (114) detektiert wird; und/oder
wobei aus den ermittelten Strahlungstemperaturwerten die Temperatur der Schmelzschicht (14) über den spezifischen Emissionsgrad der Schmelzschicht und/oder über eine Abhängigkeit des spezifischen Emissionsgrads der Schmelzschicht von der Beobachtungsrichtung und/oder durch Quotientenbildung mehrerer, aus derselben Beobachtungsrichtung bei unterschiedlichen Wellenlängen erfasster Intensitäten des Prozesslichts abgeleitet wird.

3. Verfahren nach einem der vorstehenden Ansprüche,
wobei der mindestens eine Soll-Strahlungstemperaturwert (ST) mindestens einem optimierten Schneidqualitätsmerkmal entspricht; und/oder
wobei aus dem mindestens einen ermittelten Strahlungstemperaturwert eine Weberzahl (W) der Schmelzschicht (14) und/oder eine Oberflächenspannung der Schmelzschicht und/oder ein Verhältnis der Oberflächenspannung zur Dichte der Schmelzschicht abgeleitet und durch Regeln des Strahlungstemperaturwertes dem optimierten Schneidqualitätsmerkmal entsprechend eingestellt werden; und/oder wobei das Schneidqualitätsmerkmal ausgewählt ist aus Tropfenbildung, Grattropfen, Gratperlen, Grat an der Unterseite des geschnittenen Werkstücks (10), einer Grathöhe an der Unterseite des geschnittenen Werkstücks (10), Riefen an einer Schnittkante (11) des geschnittenen Werkstücks und einer Riefenfrequenz der Riefen an der Schnittkante.

4. Verfahren nach einem der vorstehenden Ansprüche,
wobei die strahlformende dynamische Bewegung des Bearbeitungslaserstrahls (114) mittels einer Variation einer Bewegungsamplitude des Bearbeitungslaserstrahls, insbesondere im Bereich von mindestens ±0,5 mm, bevorzugt mindestens ±1 mm, und/oder einer Variation einer Bewegungsfrequenz des Bearbeitungslaserstrahls, insbesondere im Bereich von 0,1 Hz bis 17 kHz, bevorzugt 10 Hz bis 15 kHz, mehr bevorzugt 100 Hz bis 4 kHz, eingestellt wird.

5. Verfahren nach einem der vorstehenden Ansprüche,
wobei die chemische Zusammensetzung des Prozessgases durch Beimischen und/oder Dosieren mindestens eines Gases, das mindestens ein für die Schmelzschicht (14) oberflächenaktives Element oder Molekül enthält, insbesondere eines Sauerstoff enthaltenden Gases, eines Stickstoff enthaltenden Gases, eines Kohlenstoff enthaltenden Gases und/oder eines Schwefel enthaltenden Gases, eingestellt wird.

6. Verfahren nach einem der vorstehenden Ansprüche,
wobei der mindestens eine Soll-Strahlungstemperaturwert (ST) durch eine Kalibration von ermittelten Strahlungstemperaturwerten der Schmelzschicht auf mindestens ein optimales Schneidqualitätsmerkmal ermittelt wird.

7. Verfahren nach einem der vorstehenden Ansprüche,
wobei die ermittelten Strahlungstemperaturwerte auf eine Geometrie des Schnittspalts (13) abgeglichen werden.

8. Vorrichtung (100; 200; 300; 400; 500) zum Laserschneiden eines metallischen Werkstücks (10), insbesondere zum Laserschneiden eines metallischen Werkstücks mit einem Verfahren nach einem der vorstehenden Ansprüche, beinhaltend
a) einen Schneidkopf (110) mit
- einer Austrittsöffnung (112) für den Bearbeitungslaserstrahl (114) und für ein Prozessgas; und
- einer Lichtstrahloptik (116; 177; 118) zum Leiten des Bearbeitungslaserstrahls in einer z-Richtung durch die Austrittsöffnung (112) und zum Fokussieren und/oder zum strahlformenden dynamischen Bewegen des Bearbeitungslaserstrahls;
b) eine Laserquelle (119) zum Erzeugen des Bearbeitungslaserstrahls
c) eine Bewegungseinrichtung (120) zum relativen Bewegen des Schneidkopfs (110) mit einer Schneidgeschwindigkeit gegenüber dem Werkstück;
d) mindestens eine Prozessgasquelle (122) für das Prozessgas; und
e) eine Detektoreinrichtung (124) zum Detektieren eines von der Prozesszone emittierten Prozesslichts (126), das im Werkstück durch eine Wechselwirkung mit dem Bearbeitungslaserstrahl erzeugt wird, und zum Ermitteln der Strahlungstemperatur in der Prozesszone (12) anhand des detektierten Prozesslichts,;
**dadurch gekennzeichnet, dass**
die Detektoreinrichtung (124) ausgebildet ist, Strahlungstemperaturwerte einer Schmelzschicht in der Prozesszone aus mindestens einer Beobachtungsrichtung (b) in einem Winkel von 0° bis 80° zur z-Richtung und projiziert auf eine x-y-Ebene senkrecht zu der Beobachtungsrichtung örtlich aufgelöst zu ermitteln;
und die Vorrichtung ferner aufweist
f) eine Regelungseinrichtung (128) zum Regeln mindestens eines der ermittelten Strahlungstemperaturwerte auf einen in der x-y-Ebene dem jeweiligen Strahlungstemperaturwert entsprechenden, in der x-y-Ebene örtlich aufgelösten Soll-Strahlungstemperaturwert (ST) durch Anpassen mindestens eines Prozessparameters (S7a bis S7e) des Verfahrens;
wobei der mindestens eine Prozessparameter ausgewählt ist aus
- der Leistung der Laserquelle (S7a);
- der Schneidgeschwindigkeit (S7b);
- einer der Schneidbewegung überlagerten, strahlformenden dynamischen Bewegung des Bearbeitungslaserstrahls (S7c);
- einer Position einer Fokalebene des Bearbeitungslaserstrahls (S7d); und
- einer chemischen Zusammensetzung des Prozessgases (S7e).

9. Vorrichtung nach Anspruch 8,
wobei die Detektoreinrichtung (124) und/oder die Lichtstrahloptik (116; 117; 118) ausgebildet sind und/oder positioniert sind, das Prozesslicht (126) in einem Winkel von 0° zur z-Richtung koaxial zum Bearbeitungslaserstrahl (114) zu detektieren; und/oder wobei die Detektoreinrichtung (124) ausgebildet ist, aus den ermittelten Strahlungstemperaturwerten die Temperatur der Schmelzschicht (14) über den spezifischen Emissionsgrad der Schmelzschicht und/oder über eine Abhängigkeit des spezifischen Emissionsgrads der Schmelzschicht von der Beobachtungsrichtung und/oder durch Quotientenbildung mehrerer, aus derselben Beobachtungsrichtung bei unterschiedlichen Wellenlängen erfasster Intensitäten des Prozesslichts abzuleiten.

10. Vorrichtung nach einem der Ansprüche 8 und 9,
wobei der mindestens eine Soll-Strahlungstemperaturwert (ST) mindestens einem optimierten Schneidqualitätsmerkmal entspricht; und/oder wobei eine Speichereinrichtung (129) vorgesehen ist, die mit der Regelungseinrichtung datenleitend verbunden ist und den mindestens einen Soll-Strahlungstemperaturwert enthält; und/oder
wobei die Regelungseinrichtung (128) ausgebildet ist, aus dem mindestens einen ermittelten Strahlungstemperaturwert eine Weberzahl (W) der Schmelzschicht (14) und/oder eine Oberflächenspannung der Schmelzschicht und/oder ein Verhältnis der Oberflächenspannung zur Dichte der Schmelzschicht abzuleiten und durch Regeln des Strahlungstemperaturwertes dem mindestens einen optimierten Schneidqualitätsmerkmal entsprechend einzustellen; und/oder wobei das Schneidqualitätsmerkmal ausgewählt ist aus Tropfenbildung, Grattropfen, Gratperlen, Grat an der Unterseite des geschnittenen Werkstücks, einer Grathöhe an der Unterseite des geschnittenen Werkstücks, Riefen an einer Schnittkante (11) des geschnittenen Werkstücks und einer Riefenfrequenz der Riefen an der Schnittkante (11).

11. Vorrichtung nach einem der Ansprüche 8 bis 10,
wobei die Regelungseinrichtung (128) ausgebildet ist, die strahlformende dynamische Bewegung des Bearbeitungslaserstrahls (114) mittels einer Variation einer Bewegungsamplitude des mit dem beweglichen optischen Element (116) bewegten Bearbeitungslaserstrahls, insbesondere im Bereich von mindestens ±0,5 mm, bevorzugt mindestens ± 1 mm, und/oder einer Variation einer Bewegungsfrequenz des mit dem beweglichen optischen Element bewegten Bearbeitungslaserstrahls, insbesondere im Bereich von 0,1 Hz bis 17 kHz, bevorzugt 10 Hz bis 15 kHz, mehr bevorzugt 100 Hz bis 4 kHz, einzustellen; und/oder
wobei die Regelungseinrichtung (128) mit mindestens einem Element ausgewählt aus der Laserquelle(119), der Bewegungseinrichtung (120), einer Elementbewegungseinheit (117) der Lichtstrahloptik (116; 117; 118) zur Erzeugung der strahlformenden dynamischen Bewegung des Bearbeitungslaserstrahls, der Prozessgasquelle (122) , insbesondere einer Gasdosiereinrichtung (123) der Prozessgasquelle (122), und der Detektoreinrichtung (128) datenleitend verbunden ist.

12. Vorrichtung nach einem der Ansprüche 8 bis 11,
wobei die mindestens eine Prozessgasquelle (122) mindestens ein Gas bereitstellt, das mindestens ein für die Schmelzschicht (14) oberflächenaktives Element oder Molekül enthält, insbesondere ein Sauerstoff enthaltendes Gas, ein Stickstoff enthaltendes Gas, ein Kohlenstoff enthaltendes Gas und/oder ein Schwefel enthaltendes Gas, und die Regelungseinrichtung ausgebildet ist, mittels der Prozessgasquelle, insbesondere mittels der Gasdosiereinrichtung der Prozessgasquelle, die chemische Zusammensetzung des Prozessgases durch Beimischen und/oder Dosieren des mindestens einen Gases einzustellen.

13. Vorrichtung nach einem der Ansprüche 8 bis 12, wobei die Regelungseinrichtung (128) ausgebildet ist, den mindestens einen Soll-Strahlungstemperaturwert (ST) durch eine Kalibration von ermittelten Strahlungstemperaturwerten der Schmelzschicht (14) auf mindestens ein optimales Schneidqualitätsmerkmal zu ermitteln.

14. Vorrichtung nach einem der Ansprüche 8 bis 13, wobei
die Regelungseinrichtung (128) ausgebildet ist, die ermittelten Strahlungstemperaturwerte auf eine Geometrie des Schnittspalts (13) abzugleichen.

15. Computerprogrammprodukt, beinhaltend ein oder mehrere Programmmodule, die bewirken, dass die Vorrichtung (100; 200; 300; 400; 500) nach einem der Ansprüche 8 bis 14 Schritte des Verfahrens nach einem der Ansprüche 1 bis 7 ausführt, insbesondere wenn die Programmmodule in eine Speichereinrichtung der Vorrichtung geladen werden.
